# EUROPÄISCHE PATENTANMELDUNG

(11) **EP 2 876 575 A1**
(43) Veröffentlichungstag der Anmeldung: **27.05.2015**
(21) Anmeldenummer: 14194067.6
(22) Anmeldetag: 20.11.2014
(51) Int. Cl.: G06K 7/00

(54) **Chipkartenlesegerät**

(30) Priorität: 22.11.2013 DE 102013112943
(71) Anmelder: Unicept GmbH, 30159 Hannover (DE)
(72) Erfinder: Rasegi, Lukas, 30163 Hannover (DE); Barzegar, Alireza, 30451 Hannover (DE)
(74) Vertreter: Aisch, Sebastian

(57) **Zusammenfassung**

Die Erfindung betrifft ein Chipkartenlesegerät (1) für Chipkarten (2), das einen Kartenschacht (5) zum Einschieben der Chipkarte aufweist. Mittels einer Funkkommunikationseinheit (9) kann eine drahtlose Verbindung mit einem Endgerät hergestellt werden, wobei das Chipkartenlesegerät eine transparente Gehäuseseite (10) aufweist, die zumindest teilweise eine transparente Innenseite des Kartenschachtes bildet.

## Beschreibung

Die Erfindung betrifft ein Chipkartenlesegerät für Chipkarten, die eine über Chipkartenkontakte ansteuerbare integrierte Schaltung aufweisen.

In vielen Bereichen ist es heutzutage notwendig, den Zugriff auf sensible Daten sowie den Zutritt von Personen in bestimmten, sicherheitskritischen Bereichen zu reglementieren und zu kontrollieren. Hierfür werden nicht selten Chipkarten eingesetzt, welche personifiziert sind und so den kontrollierten Zugriff auf die Daten sowie den kontrollierten Zutritt in die sicherheitskritischen Bereiche zu gewährleisten.

Chipkarten, auch als Smartcard oder Integrated Circuit Card (ICC) bezeichnet, sind spezielle Plastikkarten, die hinsichtlich ihrer Abmessungen meist nach IS07816 standardisiert sind. Sicherheits-Chipkarten haben dabei meist das am weitesten verbreitete Format ID-1 mit Abmessungen von 85,60 mm x 53,98 mm. Solche Chipkarten weisen einen eingebauten integrierten Schaltkreis auf, der eine Hardware-Logik, eine Speichereinheit oder auch einen Mikroprozessor enthalten kann. Mit Hilfe von speziellen Chipkartenlesegeräten kann der integrierte Schaltkreis einer Chipkarte angesprochen und angesteuert werden.

Hierfür weisen Chipkarten meist von außen sichtbare Chipkartenkontakte auf, die mit den Kontakten eines Chipkartenlesegerätes in Kontakt gebracht werden, wenn die Chipkarte in das Chipkartenlesegerät eingeführt wird. Das Chipkartenlesegerät kann dann den integrierten Schaltkreis der Chipkarte ansteuern, um so sicherheitsrelevante Anwendungen ausführen zu können.

Neben dieser elektrotechnischen Funktion weisen Chipkarten häufig auch sogenannte Transponder auf, mit denen drahtlos der Zutritt zu sicherheitskritischen Bereichen kontrolliert werden kann. Mit Hilfe der sogenannten RFID-Technologie kann so die Chipkarte für die Zutrittskontrolle verwendet werden.

Hier neben existiert noch eine weitere Funktion von Sicherheits-Chipkarten, und zwar die der Blick-Authentifizierung. Hierfür werden die Chipkarten auf einer Seite mit personenbezogenen Daten einer Person, welcher die Chipkarte gehört, versehen, meist im Zusammenhang mit einem Lichtbild der betreffenden Person. Die Sicherheits-Chipkarte wird dann mittels einer Schutzhülle, in welche die Chipkarte eingeschoben ist, sichtbar am Körper getragen, so dass die betreffende Person anhand ihrer Sicherheitskarte mittels eines Blickes authentifiziert werden kann.

Hierbei hat es sich nun als äußerst unvorteilhaft herausgestellt, wenn ein und dieselbe Sicherheits-Chipkarte sowohl sichtbar am Körper getragen werden muss und gleichzeitig zum Authentifizieren auf elektronischem Wege dienen soll. Denn hierfür muss die Karte aus der Schutzhülle herausgenommen und in ein entsprechendes Lesegerät eingeschoben werden, was gerade bei mobilen Endgeräten, wie bspw. Smartphones oder Tablets, aufgrund der Größe der Karte gar nicht möglich ist. Zusätzliche, mobile Lesegeräte die über ein Kabel an die Endgeräte angeschlossen werden können, sind dabei umständlich und schränken die Flexibilität der betreffenden Personen ein. Darüber hinaus kann nicht gleichzeitig eine Authentifizierung auf elektronischem Wege mittels eines Kartenlesegerätes sowie einer Blick-Authentifizierung durchgeführt werden, dafür eine Authentifizierung auf elektronischem Wege die Karte in dem Kartenlesegerät eingeführt sein muss. Die Karte ist dann jedoch für andere Personen nicht mehr sichtbar, so dass die auf der Karte vorhandenen Daten, insbesondere das Lichtbild, nicht mehr zur Blick-Authentifizierung verwendet werden können.

Vor diesem Hintergrund ist es Aufgabe der vorliegenden Erfindung ein verbessertes Gerät anzugeben, mit dem eine Chipkarte sowohl zur elektronischen Authentifizierung als auch zur Blick-Authentifizierung gleichzeitig verwendet werden kann.

Die Aufgabe wird erfindungsgemäß mit dem Chipkartenlesegerät gemäß Anspruch 1 gelöst.

Demnach wird erfindungsgemäß ein Chipkartenlesegerät für Chipkarten vorgeschlagen, das einen Kartenschacht hat, der zum Einschieben einer Chipkarte in das Chipkartenlesegerät und dem lösbaren halten der eingeschobenen Chipkarte in dem Chipkartenlesegerät ausgebildet ist. Eine in dem Chipkartenlesegerät vorgesehene Kontakteinrichtung ist so ausgebildet, dass eine eingeschobene Chipkarte über die Chipkartenkontakte mit dem Lesegerät kontaktiert werden kann. So lässt sich die integrierte Schaltung der Chipkarte beispielsweise mittels eines kleinen Mikroprozessors in dem Chipkartenlesegerät ansteuern. Das Chipkartenlesegerät weist des weiteren eine Funkkommunikationseinheit auf, um das Chipkartenlesegerät drahtlos mit mindestens einem Endgerät zu verbinden, wobei das Chipkartenlesegerät eine transparente Gehäuseseite aufweist, die zumindest teilweise eine transparente Innenseite des Kartenschachtes bildet.

Damit wird es möglich, eine in das Chipkartenlesegerät eingeschobene Chipkarte drahtlos mit einem Endgerät, beispielsweise einem Smartphone oder einem Tablet, zu verbinden, um so die Funktion der integrierten Schaltung der Chipkarte zu nutzen, während die auf einer Seite der Chipkarte aufgedruckten Daten und Informationen, beispielsweise personenbezogenen Daten des Benutzers, von außen weiterhin sichtbar bleiben, auch wenn die Chipkarte in das Lesegerät eingeschoben und mit dem Endgerät entsprechend verbunden ist.

Hierdurch entsteht der vorteilhafte Effekt, dass eine Sicherheits-Chipkarte für jeden Dritten sichtbar am Körper getragen werden kann, während die in die Chipkarte eingebaute integrierte Schaltung über ein Endgerät, mit dem die Chipkarte über das Lesegerät verbunden ist, angesteuert werden kann. So lässt sich beispielsweise ein Benutzer mittels der Chipkarte an einem Endgerät authentifizieren oder auf dem Endgerät gespeicherte Daten ver- und/oder entschlüsseln, während die Chipkarte sichtbar für andere am Körper getragen wird, um so den Benutzer der Chipkarte entsprechend durch eine Blick-Authentifizierung zu verifizieren.

Damit entfällt das umständliche Handling der Chipkarten zur Authentifizierung an Endgeräten, wobei auf das Mitführen von zusätzlichen Lesegeräten verzichtet werden kann. So lässt sich auch unterwegs eine Authentifizierung an mobilen Endgeräten durchführen, ohne die Chipkarte aus ihrer transparenten Sichthülle entfernen zu müssen. Unter transparent im Sinne der vorliegenden Erfindung wird zumindest blickdurchlässig verstanden.

Vorteilhafterweise ist die Funkkommunikationseinheit zum drahtlosen Verbinden mittels Bluetooth und/oder WLAN ausgebildet. Durch die Verwendung von drahtlosen Verbindungsstandards kann somit erreicht werden, dass das Chipkartenlesegerät an eine Vielzahl unterschiedlichster Endgeräte drahtlos angebunden werden kann.

Vorteilhafterweise weist die Kontakteinrichtung des Chipkartenlesegerätes elektrische Kontakte auf, die in dem Kartenschacht an einer der transparenten Innenseite gegenüberliegenden Innenseite des Kartenschachtes angeordnet sind. Die elektrischen Kontakte der Kontakteinrichtung dienen zum Kontaktieren der Chipkartenkontakte, wenn die Chipkarte in das Chipkartenlesegerät eingeschoben wurde. Durch das Anordnen der elektrischen Kontakte an der Seite des Kartenschachtes, der der transparenten Innenseite gegenüberliegt, kann erreicht werden, dass Chipkarten insbesondere nach der europäischen Norm, bei der die Chipkartenkontakte auf der Rückseite der Chipkarte angeordnet sind, eingeschoben werden und mit dem Chipkartenlesegerät kontaktiert werden können, während die an der Vorderseite der Chipkarte angeordneten und aufgedruckten insbesondere personenbezogenen Daten weiterhin von außen sichtbar bleiben.

Die Vorderseite einer Chipkarte stellt dabei im Sinne der vorliegenden Erfindung diejenige flächige Seite der Chipkarte dar, auf der insbesondere die personenbezogenen Daten angeordnet sind. Dies umfasst beispielsweise den Namen, einer ID oder auch ein Lichtbild. Bei der Rückseite handelt es sich um die der Vorderseite gegenüberliegende flächige Seite der Chipkarte, die beispielsweise bei einer EC-Karte das Unterschriftsfeld enthält. Sicherheits-Chipkarten im europäischen Raum weisen dabei die Chipkartenkontakte auf der Rückseite auf, während auf der Vorderseite der Chipkarte die personenbezogenen Daten vorgesehen sind.

Alternativ oder zusätzlich hierzu ist es besonders vorteilhaft, wenn elektrische Kontakte der Kontakteinrichtung in dem Kartenschacht an der transparenten Innenseite angeordnet sind. Die transparente Innenseite ist dabei diejenige Innenseite des Kartenschachts, die durch die transparente Gehäuseseite gebildet wird.

Hierdurch wird es möglich, dass Chipkarten insbesondere nach der US-Norm, bei denen die Chipkartenkontakte auf der Vorderseite der Chipkarte angeordnet sind, mit dem Chipkartenlesegerät kontaktiert werden können, während die auf der Vorderseite aufgedruckten und angeordneten Daten weiterhin von außen sichtbar bleiben. Hierzu können beispielsweise dünne metallische Leiter in die transparente Gehäuseseite eingearbeitet werden, die als elektrische Kontakte der Kontakteinrichtung dienen und so die Chipkarte mit dem Kartenlesegerät verbinden.

In einer weiteren vorteilhaften Ausführungsform kann das Chipkartenlesegerät ein Display zur Anzeige und Darstellung von Informationen aufweisen. Solche Informationen können beispielsweise Codeinformationen sein, die zum sicheren Verbindungsaufbau mit dem Endgerät vorgesehen sind.

Hierzu ist es in einer weiteren Ausführungsform vorteilhaft, wenn das Display als berührungsempfindliches Display zur Eingabe von Daten ausgebildet ist, so dass neben der Anzeige von Informationen auch Daten in das Chipkartenlesegerät eingegeben werden können. Dies ist beispielsweise dann besonders vorteilhaft, wenn Sicherheitscodes zum Verbindungsaufbau oder zum Ver- und Entschlüsseln von Daten eingegeben werden sollen und hierbei ein größtmöglichstes Maß an Sicherheit gewährleistet werden muss.

Ganz besonders vorteilhaft ist es nun, wenn das Chipkartenlesegerät mittels der Funkkommunikationseinheit zum drahtlosen Verbinden mit mehreren Endgeräten gleichzeitig ausgebildet ist, so dass beispielsweise eine Authentifizierung des Benutzers mit Hilfe der Chipkarte an mehreren Endgeräten gleichzeitig erfolgen kann. Dies ist beispielsweise dann sinnvoll, wenn eine Authentifizierung sowohl an einem mobilen Endgerät, beispielsweise einem Smartphone, und gleichzeitig auch an einem festen Terminal erfolgen soll. Das Smartphone muss dann nicht mehr zwangsläufig beim Chipkartenlesegerät abgemeldet werden.

Vorteilhafterweise besteht das Gehäuse des Chipkartenlesegerätes aus einem Kunststoffmaterial oder ist aus diesem gebildet oder weist ein solches Kunststoffmaterial auf, was insbesondere in Verbindung mit der RFID-Transpondertechnologie besonders vorteilhaft ist. So lässt sich die Chipkarte dann mit der sogenannten RFID-Technologie einsetzen, ohne dass die Chipkarte aus dem Chipkartenlesegerät entfernt werden muss. Insbesondere die transparente Gehäuseseite besteht dabei aus einem Kunststoffmaterial.

Vorteilhafterweise weist das Chipkartenlesegerät eine Höhe von weniger als 70 mm, vorzugsweise 66 mm, und eine Breite von weniger als 100 mm, vorzugsweise 91,8 mm, auf. Die Tiefe bzw. die Dicke des Chipkartenlesegerätes beträgt vorteilhafterweise weniger als 10 mm, vorzugsweise 9 mm. Damit ist das Chipkartenlesegerät nur unwesentlich größer als die genormte Chipkarte gemäß IS07816 ID-1, was den Umgang mit dem Chipkartenlesegerät vereinfacht. Die Höhe der Chipkarte bezieht sich dabei auf die flächige kürzere Seite, während die Breite sich auf die flächig längere Seite der genormten Chipkarte bezieht.

Die Erfindung wird anhand der beigefügten Figur beispielhaft erläutert.

Es zeigt:

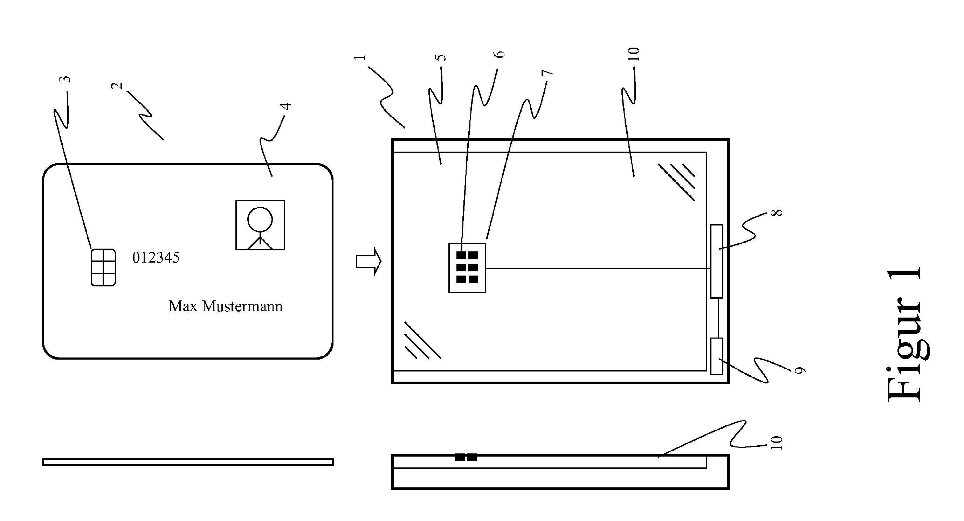

- Figur 1: - Schematische Darstellung des erfindungsgemäßen Chipkartenlesegerätes.

Figur 1 zeigt sowohl in der Seitenansicht als auch in der Frontansicht das Chipkartenlesegerät 1, in das eine Chipkarte 2 eingeschoben werden kann. Die Chipkarte 2 weist eine nicht dargestellte integrierte Schaltung auf, die in der Chipkarte 2 verbaut ist und die über die an der einen Seite der Chipkarte 2 angeordneten Chipkartenkontakte 3 ansteuerbar ist. Im Ausführungsbeispiel der Figur 1 sind die Chipkartenkontakte 3 sowie personenbezogene Daten des Besitzers der Chipkarte 2 auf ein und derselben Seite der Chipkarte 2 vorgesehen, nämlich auf der Vorderseite 4. Denkbar ist allerdings auch, dass die Chipkartenkontakte 3 und die personenbezogenen Daten auf jeweils unterschiedlichen Seiten der Chipkarte 2 angeordnet werden.

Das Chipkartenlesegerät 1 weist einen Kartenschacht 5 auf, der ausgebildet ist, die Chipkarte 2 in das Chipkartenlesegerät 1 einzuschieben und dort lösbar zu halten. Im Kartenschacht 5 sind an einer Seite elektrische Kontakte 6 einer Kontakteinrichtung 7 vorgesehen, die in dem Kartenschacht 5 so positioniert sind, dass die elektrischen Kontakte 6 der Kontakteinrichtung 7 mit den jeweiligen Chipkartenkontakten 3 der Chipkarte 2 kontaktieren, wenn die Chipkarte 2 vollständig in den Kartenschacht 5 des Chipkartenlesegerätes 1 eingeschoben ist.

Die elektrische Kontakteinrichtung 7 mit ihren elektrischen Kontakten 6 ist mit einer mikroprozessorgesteuerten Verarbeitungseinheit 8 verbunden, die zum Ansteuern der integrierten Schaltung der Chipkarte 2 über die elektrischen Kontakte 6 und über die Chipkartenkontakte 3 ausgebildet ist. Darüber hinaus steht die mikroprozessorgesteuerte Verarbeitungseinheit 8 mit einer Funkkommunikationseinheit 9 des Chipkartenlesegerätes 1 in Verbindung, um eine drahtlose Verbindung des Chipkartenlesegerät mit einem nicht dargestellten Endgerät herzustellen, so dass das Endgerät auf die Funktionalität der integrierten Schaltung der Chipkarte 2 zugreifen kann. Dadurch wird es möglich, dass die Chipkarte 2 zusammen mit ihrer integrierten Schaltung mittels des Chipkartenlesegerätes 1 mit einem Endgerät drahtlos verbunden wird, oder auch mehreren, um so die Chipkarte 2 beispielsweise zu Authentifizierungszwecken oder zum Ver- und Entschlüsseln von Daten auf dem Endgerät zu verwenden. Hierzu ist meist ein privater Schlüssel auf der Chipkarte 2 hinterlegt, mit dem beispielsweise ein Schlüsselaustausch zum Ver- und Entschlüsseln von Daten mittels eines Public-Key-Verfahrens eingeleitet werden kann.

Darüber hinaus weist das erfindungsgemäße Chipkartenlesegerät 1 eine transparente Gehäuseseite 10 auf, die gleichzeitig auch eine Innenseite des Kartenschachtes 5 bildet. Im Ausführungsbeispiel der Figur 1 ist dies diejenige Innenseite, an der die elektrischen Kontakte 6 der Kontakteinrichtung 7 angeordnet sind. Wird nun die Chipkarte 2, die die Chipkartenkontakte 3 sowie die personenbezogenen Daten auf der Vorderseite aufweist, in den Kartenschacht 5 des Chipkartenlesegerätes 1 eingeschoben, so werden nicht nur die Chipkartenkontakte 3 mit den elektrischen Kontakten 6 der Kontakteinrichtung 7 kontaktiert, sondern die personenbezogenen Daten der Chipkarte 2 auf der Vorderseite 4 bleiben auch nach Einschub der Chipkarte 2 in das Chipkartenlesegerät 1 von außen sichtbar, so dass diese Daten beispielsweise für eine Blick-Authentifizierung verwendet werden kann. Die Chipkarte 2 kann dann gleichzeitig beide Funktionen erfüllen, nämlich zum einen eine elektronische Kommunikation mit einem Endgerät ausführen, beispielsweise zum Authentifizieren, und zum anderen das Bereitstellen von analogen Daten aufgedruckt auf der Vorderseite darzustellen.

Ist die transparente Gehäuseseite beispielsweise aus einem Kunststoffmaterial hergestellt, so dass sie blickdurchlässig ist, kann eine in das Chipkartenlesegerät 1 eingeschobene Chipkarte 2 des weiteren auch mit der RFID-Transpondertechnologie zusammenarbeiten, da eine Kommunikation mit entsprechenden Transponderempfängern auch im eingeschobenen Zustand möglich ist. Die Chipkarte 2 muss somit zum Kommunizieren mit einem RFID-Transpondersender nicht mehr aus dem Chipkartenlesegerät 1 herausgenommen werden.

Selbstverständlich ist es auch denkbar, dass die elektrischen Kontakte 6 der Kontakteinrichtung 7 auf der Innenseite des Kartenschachtes angeordnet werden, die der transparenten Innenseite gegenüberliegen. Es lassen sich damit Chipkarten verwenden, bei denen die Chipkartenkontakte 3 auf der Rückseite angeordnet sind.

### Bezugszeichenliste

- 1: - Chipkartenlesegerät
- 2: - Chipkarte
- 3: - Chipkartenkontakte
- 4: - Vorderseite der Chipkarte
- 5: - Kartenschacht
- 6: - elektrische Kontakte
- 7: - Kontakteinrichtung
- 8: - Verarbeitungseinheit
- 9: - Funkkommunikationseinheit
- 10: - transparente Gehäuseseite

## Patentansprüche

1. Chipkartenlesegerät (1) für Chipkarten (2), die eine über Chipkartenkontakte (3) ansteuerbare integrierte Schaltung aufweisen, wobei das Chipkartenlesegerät (1) einen Kartenschacht (5) hat, der zum Einschieben einer Chipkarte (2) in das Chipkartenlesegerät (1) und zum lösbaren Halten der eingeschobenen Chipkarte (2) in dem Chipkartenlesegerät (1) ausgebildet ist, eine Kontakteinrichtung (7) hat, die zum Kontaktieren einer eingeschobenen Chipkarte (2) über die Chipkartenkontakte (3) mit dem Chipkartenlesegerät (1) ausgebildet ist, und eine Funkkommunikationseinheit (9) aufweist, die zum drahtlosen Verbinden des Chipkartenlesegerätes (1) mit mindestens einem Endgerät eingerichtet ist, und wobei das Chipkartenlesegerätes (1) eine transparente Gehäuseseite (10) aufweist, die zumindest teilweise eine transparente Innenseite des Kartenschachtes (5) bildet.

2. Chipkartenlesegerät (1) nach Anspruch 1, **dadurch gekennzeichnet, dass** die Funkkommunikationseinheit (9) zum drahtlosen Verbinden mittels Bluetooth und/oder WLAN ausgebildet ist.

3. Chipkartenlesegerät (1) nach Anspruch 1 oder 2, **dadurch gekennzeichnet, dass** die Kontakteinrichtung (7) des Chipkartenlesegerätes elektrische Kontakte (6) aufweist, die in dem Kartenschacht (5) an einer der transparenten Innenseite gegenüberliegenden Innenseite des Kartenschachtes (5) zum Kontaktieren mit den Chipkartenkontakten (3) angeordnet sind.

4. Chipkartenlesegerät (1) nach einem der vorhergehenden Ansprüche, **dadurch gekennzeichnet, dass** die Kontakteinrichtung (7) des Chipkartenlesegerätes (1) elektrische Kontakte (6) aufweist, die in dem Kartenschacht (5) an der transparenten Innenseite, die durch die transparente Gehäuseseite (10) gebildet wird, zum Kontaktieren mit den Chipkartenkontakten angeordnet sind.

5. Chipkartenlesegerät (1) nach einem der vorhergehenden Ansprüche, **dadurch gekennzeichnet, dass** ein Display zur Anzeige von Informationen vorgesehen ist.

6. Chipkartenlesegerät (1) nach Anspruch 5, **dadurch gekennzeichnet, dass** das Display als berührungsempfindliches Display zur Eingabe von Daten ausgebildet ist.

7. Chipkartenlesegerät (1) nach einem der vorhergehenden Ansprüche, **dadurch gekennzeichnet, dass** das Chipkartenlesegerät eine Höhe von weniger als 70 mm, vorzugsweise 66 mm, eine Breite von weniger als 100 mm, vorzugsweise 91,8 mm und eine Tiefe von weniger als 10 mm, vorzugsweise 9 mm, aufweist.

8. Chipkartenlesegerät (1) nach einem der vorhergehenden Ansprüche, **dadurch gekennzeichnet, dass** das Chipkartenlesegerät mittels der Funkkommunikationseinheit (9) zum drahtlose Verbinden mit mehreren Endgeräten gleichzeitig ausgebildet ist.

9. Chipkartenlesegerät (1) nach einem der vorhergehenden Ansprüche, **dadurch gekennzeichnet, dass** das Gehäuse des Chipkartenlesegerätes aus einem Kunststoffmaterial gebildet ist.

10. System mit wenigstens einem Endgerät und einem Chipkartenlesegerät nach einem der vorhergehenden Ansprüche.

11. System nach Anspruch 10, **dadurch gekennzeichnet, dass** das System eingerichtet ist, einen Benutzer des Endgerätes mittels einer in das Chipkartenlesegerät eingeschobenen Chipkarte zu authentifizieren, wenn das Chipkartenlesegerät mit der eingeschobenen Chipkarte mit dem Endgerät über die Funkkommunikationseinheit in Verbindung steht.

12. System nach Anspruch 10 oder 11, **dadurch gekennzeichnet, dass** das System eingerichtet ist, Daten auf dem Endgerät mittels einer in das Chipkartenlesegerät eingeschobenen Chipkarte zu Ver- und/oder Entschlüsseln, wenn das Chipkartenlesegerät mit der eingeschobenen Chipkarte mit dem Endgerät über die Funkkommunikationseinheit in Verbindung steht.
